Europäisches Patentamt

European Patent Office

Office européen des brevets

(19)

(11) Publication number: **0 165 600 B1**

# EUROPEAN PATENT SPECIFICATION

(12)

(45) Date of publication of patent specification: **21.11.91**

(51) Int. Cl.⁵: **G06F 13/36**, G06F 13/24, G06F 13/28

(21) Application number: **85107568.9**

(22) Date of filing: **19.06.85**

(54) Input/output bus for computer.

(30) Priority: **20.06.84 US 622561**

(43) Date of publication of application:
**27.12.85 Bulletin 85/52**

(45) Publication of the grant of the patent:
**21.11.91 Bulletin 91/47**

(84) Designated Contracting States:
**DE FR GB**

(56) References cited:
**EP-A- 0 109 308**
**US-A- 4 009 470**
**US-A- 4 403 282**

**COMPUTER DESIGN, vol. 23, no. 7, June 1984,
pages 129-135, Littleton, Massachusetts, US;
G.P. WHITE: "Bus structure eases multi-
processor integration"**

**RADIO FERNSEHEN ELEKTRONIK, vol. 30, no.
5, Mai 1981, pages 279-281, Berlin, DD; W.
WINTER: "Bussteuerung für mehrere
Mikrorechner"**

(73) Proprietor: **Convex Computer Corporation
3000 Waterview Parkway
Richardson Texas 75080(US)**

(72) Inventor: **Gant, Alan D.
3615 Aries Drive
Garland Texas 75042(US)**
Inventor: **Nobles, David A.
3514 Corona
Garland Texas 75042(US)**
Inventor: **Jones, Thomas M.
6050 Glen Heather
Dallas Texas 75252(US)**
Inventor: **Kimmel, Arthur T.
4322 Windward Circle
Dallas Texas 75252(US)**

(74) Representative: **UEXKÜLL & STOLBERG Paten-
tanwälte
Beselerstrasse 4
W-2000 Hamburg 52(DE)**

EDN - ELECTRICAL DESIGN NEWS, vol. 26, no. 15, 5th August 1981, pages 119-125, Boston, Massachusetts, US; N. DESAI: "8-Bit DMA controllers adapt 16-bit muPs to peripherals"

EUROMICRO 1977, MICROCOMPUTER ARCHITECTURE, 1977, pages 23-34, North-Holland Publishing Co.; H. RÖTHLISBERGER: "A standard bus for multiprocessor architecture"

E.D.N. ELECTRICAL DESIGN NEWS, vol. 29, no. 1, January 1984, pages 158-168, Boston, Massachusetts, US; J.E. HEMENWAY: "Powerful VME bus features ease high-level muC applications"

## Description

### TECHNICAL FIELD

The present invention pertains in general to computer technology and in particular to a communication bus for providing data transfer between a computer and one or more peripheral units.

### BACKGROUND ART

The central processor of a computer carries out the functions of data processing and operand manipulation. These functions can be designed to be carried out at an extremely fist rate. But to take advantage of the maximum execution rate of the processor, data must be delivered to the processor and returned from it at the rate required by the processor. Data can be received from numerous sources such as tape drives, disk drives and real time data. An input/output bus must be used to transmit the data to and from the central processor. Typically there are numerous types of devices that must be connected to an input/output bus. These numerous devices as well as the processor itself compete for the use of the bus.

Conventional input/output buses transfer an address together with each unit of data that is transmitted through the bus. Such a technique simplifies the interfacing to the bus and makes it easy to handle interruptions to the data transfer. However, this method of data transfer has a substantial overhead which seriously reduces the effective bandwidth of the data transfer through the bus. The limited bandwidth of a conventional bus can prevent the central processor from being used to its fullest capability.

In COMPUTER DESIGN, vol. 23, no. 7, June 1984, pages 129-135, Littleton, Massachusetts, US; G.P. WHITE: "Bus structure eases multiprocessor integration" a bus system is described where the bus master in the first phase of a transaction transfers the destination address and the length of a block and in subsequent phases of the transaction transfers sucsessive words.

The present invention concerns a method and a system as claimed respectively in claim 1 and claim 2.

### BRIEF DESCRIPTION OF THE DRAWINGS

For a more complete understanding of the present invention and the advantages thereof reference is now made to the following description taken in conjunction with the following drawings in which:

FIGURE 1 is a functional block diagram of a computer system which includes a computer having a memory control unit, a memory array and a central processing unit, the computer communicating through an input/output bus to a plurality of peripheral units which include input/output processors and a service processor, the system further including an interrupt bus for interconnecting various elements of the system,

FIGURE 2 is a functional block diagram of an input/output bus interface for a peripheral unit such as an input/output processor as shown in FIGURE 1,

FIGURE 3 is an illustration of a header parcel which is generated by one of the peripheral units and transmitted through the input/output processor shown in FIGURE 1,

FIGURE 4 is a timing illustration showing the sequence of requesting the input/output bus, granting use of the bus, transmitting the header parcel followed by transmission of the sections of data which are termed data parcels,

FIGURE 5 is a functional block diagram illustrating a circuit for providing transfer of data between the input/output bus and the memory control unit illusrated in FIGURE 1,

FIGURE 6 is an illustration of a sender unit for interfacing with the interrupt bus shown in FIGURE 1, and

FIGURE 7 is a functional block diagram showing a receiver unit for interfacing with the interrupt bus shown in FIGURE 1.

### DETAILED DESCRIPTION

The present invention is a method and circuit for providing data communication between the various elements of a computer system.

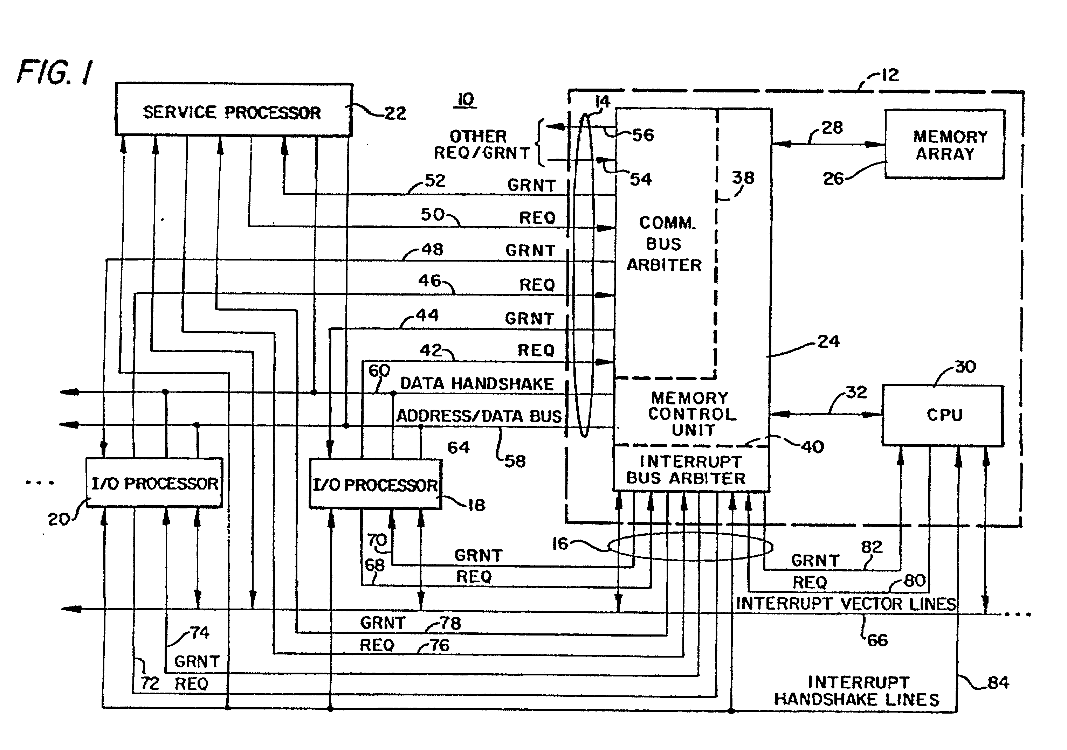

Referring now to FIGURE 1 there is illustrated a computer system 10 which includes a computer 12, a communication bus 14, an interrupt bus 16 and a plurality of peripheral units including input/output processors 18 and 20 and a service processor 22. The combination of communication bus 14 and the interrupt bus 16 comprises an input/output bus for the computer system 10.

The computer 12 includes a memory control unit 24 which is connected to both of the buses 14 and 16. A memory array unit 26 is connected to transfer data through a memory bus 28 to and from the memory control unit 24. A central processor unit 30 is connected through a communication bus 32 to the memory control unit 24.

Within the memory control unit 24 there is included a communication bus arbiter 38 and an interrupt bus arbiter 40. Each of the peripheral units, such as processors 18, 20 and 22 is connected to the arbiter 38 by both a request and a grant line. Processor 18 is connected to arbiter 38 through a request line 42 and a grant line 44. The processor 20 is connected to the arbiter 38 through a request line 46 and a grant line 48. The processor 22 is connected to the arbiter 38 through a request line 50 and a grant line 52. The request lines transfer signals from the peripheral unit processor to the arbiter 38 while the grant lines transfer a grant signal from the arbiter 38 to each of the individual processors.

Additional request and grant lines 54 and 56 are provided for any additional peripheral units which are connected to transfer data to and from the memory control unit 24.

An address/data bus 58 provides a plurality of paths for data transfer. The bus 58 is connected in parallel to the memory control unit 24 and the processors 18, 20, and 22. Bus 58 is preferably a 64 bit wide data path which provides bidirectional transfer of data. Additional processors can be connected to the bus 58 with each additional processor also having a corresponding request and grant line connected to the bus arbiter 38. A data handshake line 60 provides a plurality of contral lines connecting the memory control unit 24 and the various processors. The data handshake lines provide conventional signals to permit the transfer of data between the processors and the memory control unit.

The communication bus 14 comprises the collection of lines and buses 42-60.

The interrupt bus 16 comprises a plurality of lines. Interrupt vector lines 66 are a group of 8 parallel lines which provide a bidirectional parallel transfer of an 8 bit vector signal which corresponds to one of the units connected to the lines 66. The lines 66 are connected to the central processing unit 30, the interrupt bus arbiter 40 and to the processors 18, 20 and 22. It is further connected to any other peripheral unit on the bus 14. Each of the units on the interrupt bus 16 has a corresponding pair of request and grant lines which are connected to the arbiter 40. Processor 18 is connected to the arbiter 40 through a request line 68 and a grant line 70. The processor 20 is connected to the arbiter 40 through a request line 72 and a grant line 74. The service processor 22 is connected to the interrupt bus arbiter 40 through a request line 76 and a grant line 78. The central processing unit 30 is also connected to the arbiter 40 through a request line 80 and a grant line 82. Each of the units on the interrupt bus 16 is further connected through a common group of interrupt handshake lines 84 for providing control of the transmission of interrupt vector signals through the interrupt bus 16.

Further referring to FIGURE 1, the combination of the communication bus 14 and the interrupt bus 16 comprises the overall input/output bus for the computer system 10. Various processors are added to the input/output bus as required for a particular implementation. The input/output bus serves as the only path for input/output traffic for the system 10. The buses 14 and 16 are synchronous in operating at the clock cycle of the computer system 10. The various processors 18, 20 and 22, connected to the communication bus 14, function as masters of the bus while the memory control unit 24 is the slave. A transfer request is initiated by a processor, such as for example, processor 18, by generating a request signal that is transmitted through line 42 to the arbiter 38. When the bus 14 becomes available, the arbiter 38 provides a grant signal through line 44 back to the processor 18. The processor 18 then sends a header parcel, further described below, through the bus 58 to the memory control unit 24. Following transmittal of this header parcel, data is transmitted as data parcels through the bus 58. The data transfer can be either from the processor 18 to the memory control unit 24 or from the memory control unit 24 to the input/output processor 18. In any case the data being transferred ultimately starts or ends at the memory array 26. Data communication operation for the computer system 10 is described in further detail below.

Further referring to FIGURE 1, the interrupt bus 16 provides a means of communication between the various processors 18, 20 and 22 and the central processing unit 30. Interrupt requests can be transmitted from any one of these units to any other one of the units. The primary function of the interrupt requests are to signal completion of a task, request action or to indicate an error condition. Briefly, the interrupt bus 16 functions much like the communication bus 14 described above. A peripheral unit, such as processor 18, initiates the interrupt procedure by transmitting a request signal through its request line 68 to the interrupt bus arbiter 40. When the arbiter 40 determines that the interrupt bus 16 is available, it provides a grant signal through the line 70 to the processor 18. Upon receipt of the grant, the processor 18 places an interrupt vector, an eight bit code, on the interrupt vector lines 66. This interrupt vector signal is transmitted to all of the other units on the interrupt bus 16. However, only one of the units will recognize the vector as being directed to that particular unit. The receiving unit will acknowledge receipt of the vector and then complete the required interrupt operation. The required interfacing operations between the transmitting and receiving units is controlled by signals transmitted through the handshake lines 84. The interrupt operation for computer system 10 is described below in further detail.

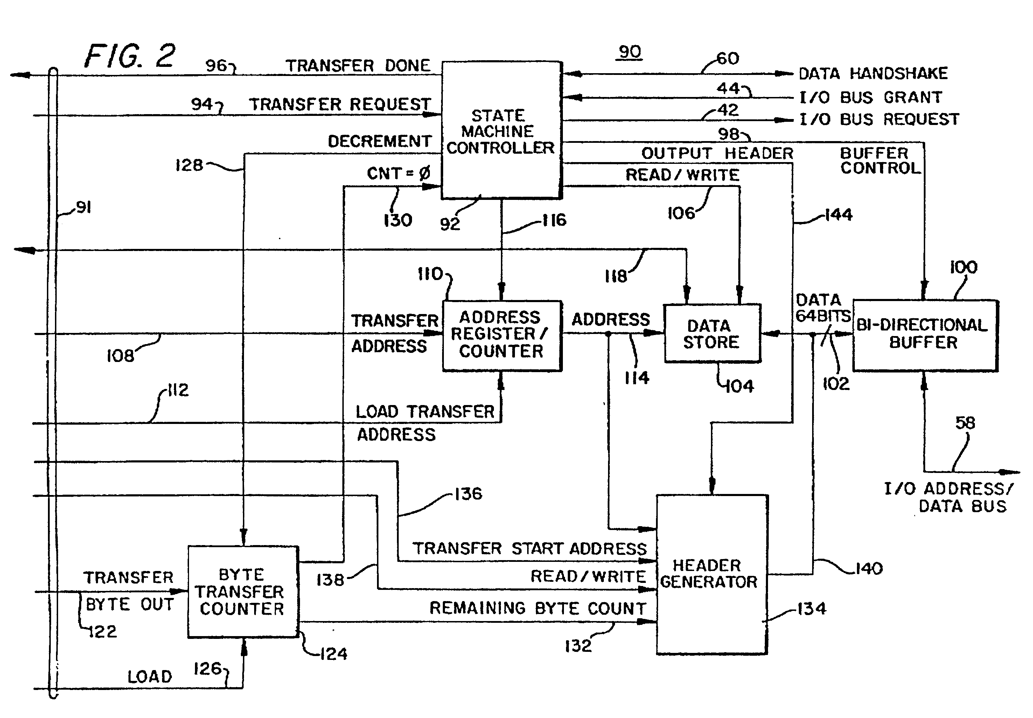

Referring now to FIGURE 2 there is illustrated a typical interface circuit 90 for interfacing a peripheral unit, such as one of the processors 18, 20 and 22 to the communication bus 14. The interface circuit 90 includes a state machine controller 92 which generates control signals in response to various inputs. The controller 92 is connected to the data handshake line 60, the I/O bus grant line 44 and the request line 42. For the present example the interface circuit 90 is used within the input/output processor 18, however, a similar interface circuit is used with each of the other processors shown in FIGURE 1. A group 91 of interface lines connects the interface circuit 90 to other sections of the processor 18. In operation, the state machine controller 92 receives a data transfer request via a line 94 from the processor 18. When a data transfer is completed, a transfer done command is transmitted to the processor 18 via a line 96.

The controller 92 is further connected through a line 98 to control the operation of a buffer 100. The buffer 100 provides bidirectional data transfer between the address/data bus 58 and an internal data bus 102. The buffer 100, for the described embodiment, stores a longword of data which is 64 bits.

The interface circuit 90 further includes a data store 104 which is connected to transmit to or receive data from the bus 102. A read or write command is transmitted from the controller 92 through a line 106 connected to the data store 104.

The processor 18 provides a data transfer address through a line 108 to an address register/counter 110. A load transfer address command is generated by the processor 18 and transmitted through a line 112 to the address register counter 110. The counter 110 receives an initial address and adds a constant number to this address to produce a sequence of addresses which are transmitted through a line 114 to the data store 104. The first address and any subsequent address can be selected by the controller 92 through a line 116. Data is transferred between the processor 18 and the data store 104 through a bus 118.

The processor 18, in preparing a transfer request, produces a count of the number of bytes in the data block for the transfer request. This count of the size of the block to be transferred is provided as a transfer byte out count through a line 122 to a byte transfer counter 124. The count is entered into the counter 124 through a load command transmitted through a line 126. The controller 92 monitors each transfer of data through the bus 58. As each group of bytes comprising a data parcel is transferred, the counter 24 is decremented by that number of bytes by operation of a command transmitted through a decrement line 128 from the controller 92 to the counter 124. The transfer of data is completed when the count within counter 124 equals 0. A count = 0 signal is then transmitted from counter 124 through a line 130 to the controller 92 to signal the completion of the data transaction.

A remaining byte count, the count within the counter 124, can be transmitted through a line 132 to a header generator 134 when a full transaction is not completed. The processor 18 further provides a data transfer start address through a line 136 to the header generator 134. In addition the processor 18 provides a command code through a line 138 specifying a read, write or other possible transaction to the header generator 134. After a header parcel, described further below, has been prepared by the header generator 134 and the state machine controller 92 has obtained use of the communication bus 14, the header parcel is transmitted from the header generator 134 through a line 140 onto the internal data bus 102 for transfer through the buffer 100 to the I/O bus 58. The controller 92 provides a command to output the header parcel and this command is transmitted through a line 144 to the header generator 134. The detailed operation of interface circuit 90 is further described below.

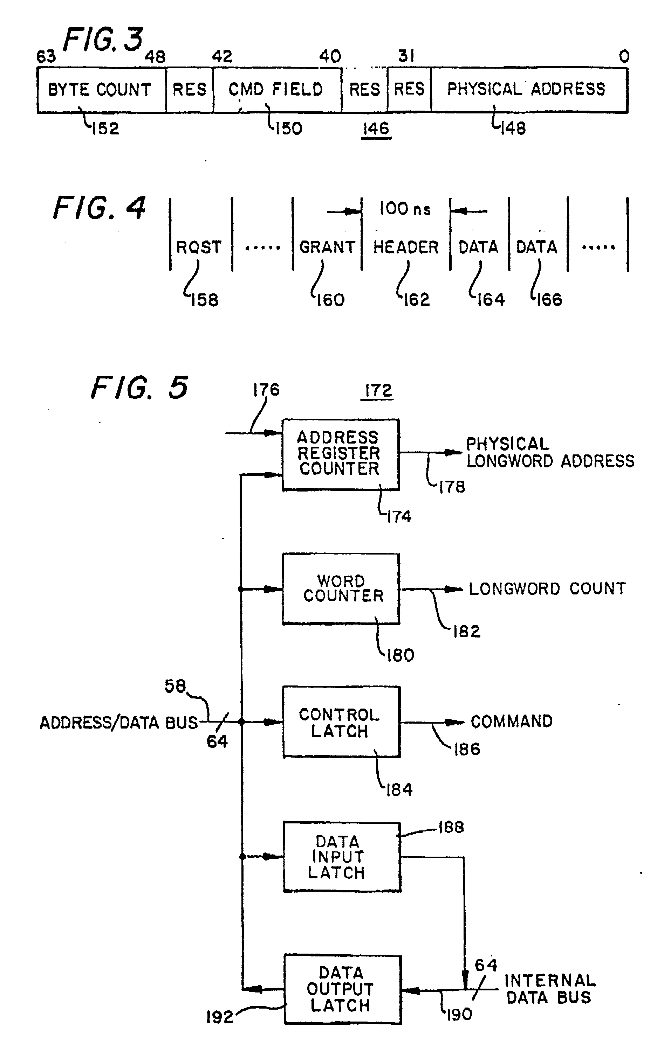

The header parcel noted above is shown in further detail in FIGURE 3. The header parcel is indicated generally by the reference numeral 146. The parcel 146 includes a physical address field 148 which comprises bits 0-30. The physical address is the starting address for the transaction. A command field 150 comprises bits 40-42 and specifies the type of transaction, such as read or write. There is further included a byte count field 152 which extends to cover bits 48-63. The lower three bits of the byte count field 152 determine the location of the first byte within the first data parcel transmitted in a data transfer. The remaining bit locations within header parcel 146 are reserved.

A timing sequence for obtaining use of the communication bus 14 and transferring data is illustrated in FIGURE 4. Each of the time segments comprises a clock tick in which one event is carried out. The first step in a data transfer comprises transmitting a request to the arbiter 38. A request 158 is sent during a clock tick. The arbiter 38 evaluates various factors including the present use of the bus 14 and the other units requesting to use the bus 14. When appropriate, the arbiter 38 provides a grant 160 to the requesting processor. The requesting processor then transmits a preformed header parcel 162 in the clock tick following the grant. Immediately following the header parcel 162 there is a series of data transfers of data parcels 164, 166. . . until the data block is completely transferred or there is an interrupt of the transfer process. In a preferred embodiment of the invention each of the clock ticks has a period of 100 nanoseconds.

Referring to FIGURE 5 there is shown a memory control unit interface circuit 172 which connects to the communication bus 14 for operating in conjunction with the interface circuit 90 for each of the peripheral units. The circuit 172 includes an address register counter 174 which is connected to receive addresses from the bus 58. The counter 174 further receives an increment command through a line 176 which causes the counter 174 to produce a sequence of physical longword addresses which are transmitted through a line 178 for delivery to the memory array 26. A word counter 180 is connected to the bus 58 for receiving the count which is transmitted as a part of the header parcel 146. The counter 180 transmits a longword count through a line 182 for use by the memory control unit 24. The circuit 172 further includes a control latch 184 which receives the command code that is transmitted as a part of the header parcel 146 through the bus 58. This command is transmitted through a line 186 to the memory control unit 24.

Data received from the bus 58 is input to a data input latch 188 which is connected to transfer the data to a bidirectional internal bus 190. A data output latch 192 is connected to transfer data from the internal data bus 190 to the address/data bus 58.

The operation of the communication bus 14 for providing data transfer between the memory control unit 24 and any one of the peripheral units connected to the bus 14 is now described in reference to FIGURES 1-5. A data transfer request is initiated by a peripheral unit, such as one of the processors 18, 20 or 22. Processor 18 is used for the present example. A data transfer can be either from the processor 18 into the memory control unit 24 or from the memory control unit 24 to the input/output processor 18. The first step in a data transfer is to generate a header parcel as shown in FIGURE 3. The processor 18 has a physical address for a data block transfer. This physical address is transmitted through line 108 to the address register counter 110. This address is then transferred through line 142 into the header generator 134 to form field 148 of the header parcel 146. The size, byte count, of the data transfer is transmitted through line 122 to the counter 124. This byte count is transmitted through line 132 into the header generator 134 to comprise the field 152 within the header parcel 146. The command code to determine whether this transfer is a read, write or other operation is transmitted from processor 18 through line 138 into the header generator 134. This command code becomes field 150 within the header parcel 146.

After the header parcel is prepared, the controller 92 initiates a request command through the request line 42 to the arbiter 38. This corresponds to the request 158 shown in FIGURE 4. If the bus 14 is not in use then the arbiter 38 immediately provides a grant, such as 160, which is transmitted through line 44 to the controller 92. But if other peripheral units are competing with processor 18 for use of the bus 14, the arbiter 38 must determine which request is the first to receive use of the bus 14. This is primarily done on a round-robin or rotary basis among the similar processors on the bus 14. Basically when there is contention, no processor will receive the bus twice before another processor has received it once. There may further be an allocation of priorities among various units for access to the bus 14. For example, the service processor 22 typically transfers much smaller units of data than the processor 18. Therefore, the processor 22 may be assigned a higher priority for accessing the bus 14.

After the arbiter 38 sends the grant signal to the controller 92, an output header signal is transmitted through line 144 to the header generator 134. This causes the header parcel to be transferred from the generator 134 onto the internal bus 102 to the buffer 100. The controller 92 then activates the buffer 100 to transfer the header parcel onto the address/data bus 58 for transfer to the memory control unit 24. Upon receipt at the interface circuit 172, the various fields in the header parcel are stored in appropriate locations. The physical address is stored in the address register counter 174. The count is stored in the word counter 180. The control code is stored in the control latch 184. The control code that determines whether this a read, write or other operation is transmitted through line 186 to another portion of the memory control unit 24 to activate an appropriate operation, such as read or write with respect to the memory array 26.

First, assume this to be a write operation. The I/O processor 18 has provided data to the data store 104 through line 118. The data store 104 functions as a buffer. A parcel of data, typically a longword, 64 bits, is transferred from the data store 104 to the buffer 100 where it is passed to the bus 58 and then stored in the input latch 188. The data parcel is then passed to the internal data bus 190 where it is stored in the memory array 26 at the address provided by counter 174. Data parcels are sent in a similar fashion during each sequential clock tick, as shown in FIGURE 4. During each clock tick the counter 174 is sequenced to form a new address for storing the corresponding data parcel received during the clock tick. This process continues until the decreasing longword count in the word counter 180 reaches 0. This indicates completion of the data transfer.

If the data transfer operation, on the other hand, is a read, the address in the counter 174 is provided to read a block of data from the memory array 26. The data block is returned to the data output latch 192 as a data parcel which is transmitted through the bus 58, to the buffer 100 for storage in the data store 104. When an appropriate size block of data is collected in the data store 104 it is then transmitted through the line 118 to the I/O processor 18. It is then typically stored on a disk or tape. The address in the counter 174 is sequenced to the next memory block to produce the next data parcel for transmission through the data bus 58. This process is repeated until the count within the word counter 180 roaches 0. At this point the read operation is complete.

A typical data transaction between the processor 18 and the memory control unit 24 comprises moving a 4K byte page of data. It is possible that this transaction may be terminated before completion by the arbiter 38 removing the grant signal on line 44. This can occur if a higher priority peripheral unit or the central processor 30 requests use of the bus 14. This does not cause the loss of any data. Upon termination of the transfer, the address for the next data parcel is held in the counter 110 which has been uniformly changed for each transfer of the data parcel. The number of bytes remaining to be transferred is maintained in the counter 124. After the data transfer is broken, the state machine controller 92 starts the process over again to complete the data transfer. A new header parcel is generated in the header generator 134. The address in the counter 110 is transferred via line 114 to the header generator 134 to produce the address portion of the header parcel. The count in counter 124 is transferred to the generator 134 for the data count field of the new header parcel. The command code remains the same. When the controller 92 receives a grant from the arbiter 38 the data transfer process is started again by the transmission of the header parcel through bus 58 to the interface 172. The transfer continues in the same manner as the method described above. This second transmission of the data block can either be carried through to completion or again can be interrupted. Any number of interruptions may occur but the data transfer process can be reinitiated each time to finally provide transfer for the complete data block.

The method of transferring data as described for the present invention provides a significantly greater bandwidth in comparison to previous techniques. This is due to the very small amount of overhead required for a large block transfer, which is the typical case. The only overhead required is for the header parcel. The required addresses at the memory control unit 24 are generated within the unit itself. Breaks in the data transmission are readily handled by maintaining a running address and byte count for the data transfer at the originating unit, such as processor 18. Thus, an interruption in the data transfer process does not result in any loss of data and can be immediately reinitiated in the same fashion as an original transfer. This provides substantial flexibility in input/output communication by permitting the allocation of priorities of operation for various units.

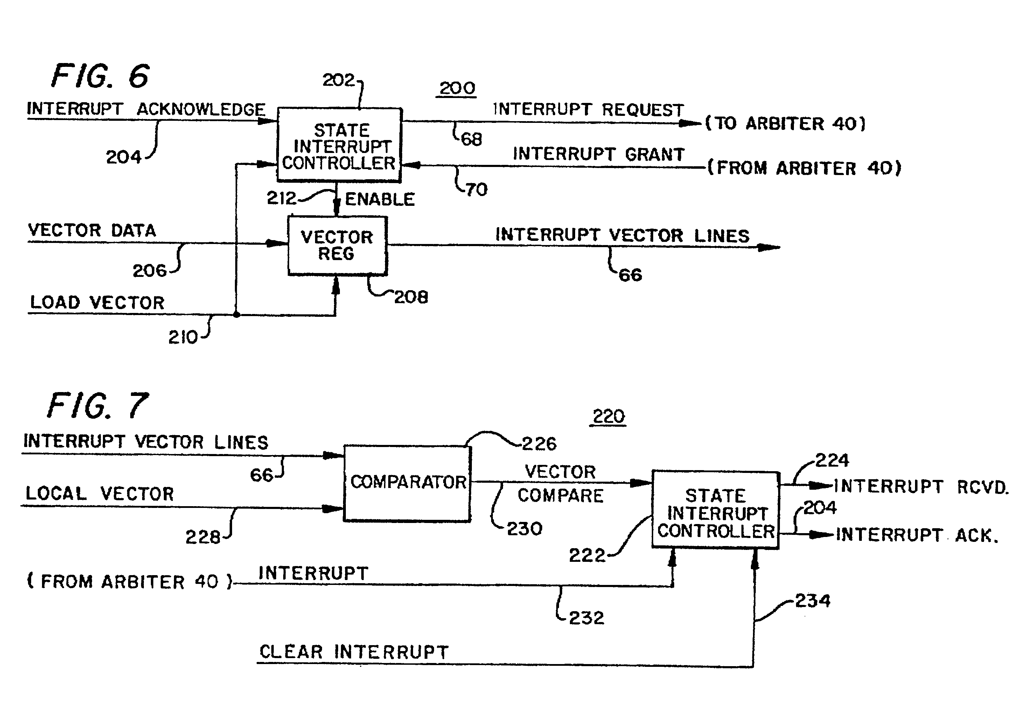

The interrupt bus system is now described in reference to FIGURES 6 and 7. FIGURE 6 illustrates a sender interface circuit 200 for operation with the interrupt bus 16. Circuit 200 is described in reference to I/O processor 18 as an example. However, a similar sender interface circuit is required for each unit that interfaces to the interrupt bus 16. A state interrupt controller 202 generates a request signal at the request line 68 and receives an interrupt grant signal through the line 70. As a part of the interrupt handshake lines 84 there is included an interrupt acknowledge line 204 which is connected in common to each of the units on the interrupt bus 16. The use of this line is further described in reference to FIGURE 7.

Vector data, comprising an 8 bit code, is generated by the processor 18 and transmitted through a line 206 to a vector register 208. The vector data signal transmitted to register 208 identifies a selected element of the computer system that is to receive an interrupt request. The vector data signal is loaded into register 208 in response to a load vector command transmitted through line 210. The vector data signal is transmitted from vector register 208 to the interrupt vector lines 66 in response to an enable signal generated by the controller 202 and transmitted through a line 212 to the register 208.

Referring now to FIGURE 7 there is illustrated a receive circuit 220 which forms a part of the interface to the interrupt bus 16 for each of the units connected to the interrupt bus. The circuit 220 includes a state interrupt controller 222 which generates the interrupt acknowledge signal at line 204. The controller 222 further generates an interrupt received signal at a line 224 to activate the interrupt procedure within the processor 18.

The interrupt vector lines 66 are connected to a comparator 226. A local vector signal is input at a line 228 by the processor 18 to identity the vector that is recognized by that particular unit on the interrupt bus 16. The comparator 226 makes a comparison of the interrupt vector signal received at lines 66 with the local vector signal input at line 228 and upon detection of a comparison produces a vector compare signal which is transmitted through a line 230 to the interrupt controller 222. An interrupt line 232 provides an interrupt initiation signal indicating that an interrupt request had been transmitted through the interrupt vector lines 66. This interrupt initiation signal at line 232 is transmitted to the state interrupt controller 222. It serves essentially as an enable to receive the vector compare signal transmitted through line 230. A clear interrupt signal is generated locally by the processor 18 and transmitted through a line 234 to the controller 222. The clear interrupt signal indicates that the function carried out in response to the interrupt request has been completed.

Operation of the interrupt bus is now described in reference to FIGURES 1, 6 and 7. For this description an example will be presented utilizing the I/O processor 18 which includes the interface circuits 200 and 220. The sequence of producing an interrupt request and transmitting it to any one of the other units on the interrupt bus 16 begins with the generation of a vector data signal which is transmitted through line 206 to the vector register 208. State controller 202 applies a request signal to the line 68 for requesting use of the interrupt bus 16. The request signal is received by the interrupt bus arbiter 40 within the memory control unit 24. This arbiter 40 also functions essentially in a round-robin or rotary fashion when there is a conflict in requesting use of the bus 16. As with the arbiter 38, when there is a conflict the basic arbitration rule is that no requestor will have use of the bus twice before one requestor has it once. However, priority may be assigned to certain units to override this rotation scheme.

The arbiter 40 awards the interrupt bus 16 to the requestor by applying a grant signal to the interrupt grant line 70. In response to receipt of the grant the controller 202 applies an enable signal to the register 208 for applying the interrupt vector signal to the lines 66. This vector is then transmitted to each of the other units connected to the interrupt bus 16. However, each vector is recognized by only one unit. But a number of vectors may be transmitted to any one unit to produce different results. The vector signal is input to the comparator 226 for comparison with the local vector signal to determine if the two vectors compare. At the time of making the grant, the arbiter 40 applies a signal to the interrupt line 232 indicating that a valid interrupt vector request has been applied to the vector lines 66. If the interrupt signal at line 232 and the vector compare signal line 230 are received concurrently at the controller 222 there is generated an interrupt acknowledge signal which is transmitted through line 204 to each of the units on the interrupt bus 16. The originating unit, processor 18 in this example, receives the interrupt acknowledge thereby verifying that the interrupt vector has been successfully transmitted and received. The controller 222 further produces an interrupt received signal at line 224 for initiating the processor 18 to carry out the function specified by the interrupt request. During the time that an interrupt function is in process the processor 18 provides an interrupt signal through line 232 indicating that the most recently received interrupt request is in process. This prevents a second interrupt from being received before the first is completed. Upon completion of the received interrupt, the interrupt signal at line 232 is returned to the noninterrupt state to permit receipt of another interrupt.

A particularly significant feature of the present invention is that any unit on the interrupt bus 16 can transmit an interrupt request to any other unit on the interrupt bus 16. There is no requirement to transmit the interrupts to any central location. This adds to the flexibility and speed of operation of the system 10.

## Claims

1. A method for data communication via a bus (14) connecting a computer (12) to one or more peripheral units (18) which are selectively granted use of the bus (14) by a bus arbiter (38) for transferring data blocks (164) between the computer (12) and one of the peripheral units (18), wherein communication of data blocks (164) is initiated when a request is made to the bus arbiter (38) for use of the bus (14) by one of the peripheral units (18) and the bus arbiter (38) grants use of the bus (14) to the requesting peripheral unit (18), the method **characterized** in the steps of:

   generating a header parcel (146) by an interface circuit (90) for said one peripheral unit (18), said header parcel (146) comprising an address (148) for a block (164) to be transferred between said computer (12) and said one peripheral unit (18), a count (152) indicating the size in units of said data block (164) and a command code (150) indicating whether the data block (164) transfer is a read from or write to said computer (12), for said data block (164),

   transmitting said header parcel (146) from said interface circuit (90) for said one peripheral unit (18) via said bus (14) to said computer (12) after said step of granting,

   sequentially transmitting units of said data block (164) via said bus (14) between said computer (12) and said peripheral unit (18),

   maintaining by said interface circuit (90) for said one peripheral unit (18) a count of the number of said units of said data block (164) remaining to be transmitted between said computer (12) and said one peripheral unit (18),

   terminating transfer of said data block (164) between said computer (12) and said one peripheral unit (18) prior to the transfer of the entirety of said data block (164) as a result of, for example, preemption of said bus (14) by other of said peripheral units (18, 20),

generating a new header parcel (146) by said interface circuit (90) for said one peripheral unit (18) to complete the transfer of said data block (164), said new header parcel (146) comprising a new address determined from said address for said data block (164) and said remaining count of the number of units of said data block (164) at the time of the terminating of said transfer of said data block (164), said remaining count and said command code, and

repeating said previous steps of requesting and granting, transmitting said new header parcel (146) from said interface circuit (90) for said one peripheral unit (18) to said computer (12), and

sequentially transmitting the remaining units of said data block (164) via said bus (14) between said computer (12) and said one peripheral unit (18).

2. An input/output bus system for providing communication of data blocks (164) between a computer (12) and one or more peripheral units (18) via a bus (14) wherein a bus arbiter (38) selectively grants use of the bus (14) to one of the peripheral units (18), the bus (14) includes a plurality of address/datalines (58) connected in parallel to the computer (12) and the peripheral units (18, 20) for bidirectional transmission of data through the lines (58), the bus arbiter (38) grants use of the lines (58) in the absence of a conflict and on a predetermined priority basis when there is a conflict for use of the address/data lines (58) by the computer (12) and the peripheral units (18, 20), a request line (42) and grant line (44) is provided for each of the peripheral units (18) for connection to the bus arbiter (38), and a plurality of handshake lines (60) connect the computer (12) to the peripheral units (18, 20) for controlling transmission of addresses and data, **characterized** by,

a plurality of circuit means (134) respectively within each of said peripheral units (18, 20) for generating a header parcel (146) for transmission through said address/data lines (58) to said computer (12), said header parcel (146) comprising an address (148) for a first one of a plurality of data units which comprise a data block (164) to be transferred between said computer (12) and one of said peripheral units (18, 20), a count (152) indicating the size of said data block (164) and a command code (150) for indicating a read from or write to said computer (12), for said data block (164),

circuit means (100) within each of said peripheral units (18, 20) and connected to said address/data lines (58) for transmitting said header parcel (146) from each of said peripheral units (18, 20) via said address/data lines (58) to said computer (12),

circuit means (174) within said computer (12) for generating a sequence of addresses derived from said address included in said header parcel (146), said sequence of addresses corresponding to said units of said data block (164),

storage means (104, 188, 192) within each of said peripheral units (18, 20) and said computer (12) for storing said data units therein,

control circuit means (92) within each of said peripheral units (18, 20) and connected to control said address/data lines (58) for transferring said data units of said data block (164) via said address/data lines (58) between the storage means (188,192) in said computer (12) and the storage means (104) in said peripheral units (18, 20),

circuit means (124) within each of said peripheral units (18, 20) for maintaining a count of the number of the units of said data block (164) transmitting between said computer (12) and said peripheral unit (18) following transmittal of said header parcel (146), and

said circuit means (134) for generating a header parcel (146) is connected to receive said count for producing a new header parcel (146) when the transfer of said data block (164) has been terminated before completion, said new header parcel (146) including a new address derived from the address for said data block (164) and said count, said count for indicating the size of the remainder of the data block (164) and said command code, said new header parcel (146) for transmission from the generating peripheral unit (18) to said computer (12) to complete the transfer of said data block (164).

## Revendications

1. Procédé de communication de données par un bus (14) connectant un ordinateur (12) à une ou plusieurs unités périphériques (18), qui reçoivent sélectivement d'un arbitre de bus (38) l'autorisation d'utiliser le bus (14) pour transférer des blocs de données (164) entre l'ordinateur (12) et l'une des unités périphériques (18), procédé dans lequel la communication de blocs de données (164) est déclenchée lorsque l'arbitre de bus (38) reçoit de l'une des unités périphériques (18) une demande d'utilisation du bus (14) et lorsque l'arbitre de bus (38) autorise ladite unité périphérique (18) à utiliser le bus (14), procédé caractérisé par les étapes suivantes :

génération d'un paquet Rubrique (146) par un circuit d'interface (90) pour ladite unité périphérique (18), le paquet Rubrique (146) comprenant une adresse (148) pour un bloc de données (164) à transférer entre l'ordinateur (12) et l'unité périphérique (18), un nombre (152) indiquant la longueur en unités du bloc de données (164) et un code de commande (150) indiquant si le transfert de bloc de données (164) est une lecture de ou une écriture dans l'ordinateur (12) pour le bloc de données (164),

transmission du paquet Rubrique (146) entre le circuit d'interface (90) pour l'unité périphérique (18) et l'ordinateur (12) par l'intermédiaire du bus (14) après l'étape d'autorisation précitée,

transmission séquentielle d'unités du bloc de données (164) entre l'ordinateur (12) et l'unité périphérique (18) par l'intermédiaire du bus (14),

mise à jour, par le circuit d'interface (90) et pour l'unité périphérique (18), d'un compte du nombre d'unités du bloc de données (164) restant à être transmises entre l'ordinateur (12) et l'unité périphérique (18),

achèvement du transfert du bloc de données (164) entre l'ordinateur (12) et l'unité périphérique (18) avant le transfert de la totalité du bloc de données (164) suite, par exemple, à la présélection du bus (14) par d'autres unités périphériques (18, 20),

génération d'un nouveau paquet Rubrique (146) par le circuit d'interface (90) par ladite unité périphérique (18) afin d'y achever le transfert du bloc de données (164), ledit nouveau paquet Rubrique (146) comprenant une nouvelle adresse déterminée à partir de ladite adresse pour le bloc de données (164) et dudit nombre d'unités du bloc de données (164) restant à transmettre au moment de l'achèvement du transfert du bloc de données (164), le nombre d'unités précité restant à transmettre et le code de commande,

répétition des étapes précédentes de demande et d'autorisation, transmission du nouveau paquet Rubrique précité (146) entre le circuit d'interface (90) pour l'unité périphérique (18) et l'ordinateur (12), et

transmission séquentielle des unités restantes du bloc de données (164) par l'intermédiaire du bus (14) entre l'ordinateur (12) et l'unité périphérique (18).

2. Système de bus d'entrée/sortie destiné à établir une communication de blocs de données (164) entre un ordinateur (12) et une ou plusieurs unités périphériques (18) par l'intermédiaire d'un bus (14) dans lequel un arbitre de bus (38) autorise sélectivement l'utilisation du bus (14) à l'une des unités périphériques (18), le bus (14) comprend plusieurs lignes d'adresses/de données (58) connectées en parallèle à l'ordinateur (12) et les unités périphériques (18, 20) destinées à la transmission bidirectionnelle de données par les lignes (58), l'arbitre de bus (38) autorise l'utilisation des lignes (58) en l'absence de conflit pour l'utilisation des lignes d'adresses/de données (58) par l'ordinateur (12) et les unités périphériques (18, 20), une ligne de demande (42) et une ligne d'autorisation (44) sont prévues pour chacune des unités périphériques (18) pour la connexion à l'arbitre de bus (38), et plusieurs lignes d'établissement de liaison (60) connectent l'ordinateur (12) aux unités périphériques (18, 20) pour contrôler la transmission d'adresses et de données, caractérisé par

plusieurs circuits (134) situés respectivement dans chaque unité périphérique (18, 20) pour engendrer un paquet Rubrique (146) destiné à être transmis à l'ordinateur (12) par l'intermédiaire des lignes d'adresses/de données (58), le paquet Rubrique (146) comprenant une adresse (148) pour une première parmi plusieurs unités de données qui comprennent un bloc de données (164) à transférer entre l'ordinateur (12) et l'une desdites unités périphériques (18, 20), un nombre (152) indiquant la longueur du bloc de données (164) et un code de commande (150) pour indiquer une lecture de ou écriture dans l'ordinateur (12), pour le bloc de données (164),

un circuit (100) situé dans chacune des unités périphériques (18, 20) et connecté auxdites lignes d'adresses/de données (58) pour transmettre le paquet Rubrique (146) à l'ordinateur (12) à partir de chaque unité périphérique (18, 20) par l'intermédiaire des lignes d'adresses/de données 58,

un circuit (174) dans l'ordinateur (12) destiné à engendrer une séquence d'adresses dérivées de ladite adresse comprise dans le paquet Rubrique (146), ladite séquence d'adresses correspondant aux unités précitées du bloc de données (164),

des mémoires (104, 188, 192) dans chacune des unités périphériques (18, 20) et l'ordinateur (12) destinées à stocker les unités de données précitées,

un circuit de contrôle (92) dans chacune des unités périphériques (18, 20) et connecté de manière à contrôler les lignes d'adresses/de données (58) afin de transférer les unités de données précitées dudit bloc de données (164) entre les mémoires (188, 192) dans l'ordinateur (12) et la mémoire (104) dans les unités périphériques (18, 20), par l'intermédiaire des lignes d'adresses/de données (58),

un circuit (124) dans chacune des unités périphériques (18, 20) destiné à mettre à jour le nombre d'unités du bloc de données (164) transmises entre l'ordinateur (12) et l'unité périphérique (18) à la suite de la transmission du paquet Rubrique (146), et

ledit circuit (134) afin destiné à engendrer un paquet Rubrique (146) est connecté de manière à recevoir ledit nombre afin de générer un nouveau paquet Rubrique (146) lorsque le transfert du bloc de données (164) a été terminé avant achèvement, le nouveau paquet Rubrique (146) comprenant une nouvelle adresse dérivée de l'adresse par le bloc de données (164) et dudit nombre, le nombre précité indiquant la longueur du restant du bloc de données (164) et le code de commande précité, le nouveau paquet Rubrique (146) étant destiné à la transmission entre l'unité périphérique (18) et l'ordinateur (12) de manière à achever le transfert du bloc de données (164).

## Patentansprüche

1. Verfahren für den Datenaustausch über eine Sammelleitung (14), die einen Rechner (12) mit einer oder mehreren peripheren Einheiten (18) verbindet, denen eine selektive Nutzung der Sammelleitung (14) über eine Sammelleitungs-Zugriffseinrichtung (38) für die Übertragung von Datenblöcken (164) zwischen dem Rechner (12) und einer der peripheren Einheiten (18) gewährt wird, wobei der Austausch von Datenblöcken (164) dann initialisiert wird, wenn gegenüber der Sammelleitungs-Zugriffseinrichtung (38) eine Anforderung gemacht wird, um die Sammelleitung (14) durch eine der peripheren Einheiten (18) zu nutzen und die Sammelleitungs-Zugriffseinrichtung (38) die Nutzung der Sammelleitung (14) der anfordernden peripheren Einheit (18) gestattet, wobei das Verfahren durch die folgenden Schritte gekennzeichnet ist:
das Generieren einer Vorblockparzelle (146) durch eine Schnittstellenschaltung (90) für die periphere Einheit (18), wobei die Vorblockparzelle (146) eine Adresse (148) für einen Datenblock (164) umfaßt, der zwischen dem Rechner (12) und der peripheren Einheit (18) zu übertragen ist, einen Zählwert (152), der die Größe der Einheiten des Datenblocks angibt und einen Kommandocode (150), der angibt, ob die Übertragung des Datenblocks (164) ein Lesen von oder ein Schreiben zu dem Rechner (12) für den Datenblock (164) ist;
das Übergeben der Vorblockparzelle (146) von der Schnittstellenschaltung (90) für die periphere Einheit (18) über die Sammelleitung (14) zu dem Rechner (12) nach dem Gestattungsschritt;
das sequentielle Übertragen von Einheiten des Datenblocks (164) zwischen dem Rechner (12) und der peripheren Einheit (18);
das Führen eines Zählwertes über die Anzahl der Einheiten des Datenblocks (164), die noch zwischen dem Rechner (12) und der peripheren Einheit (18) zu übertragen bleiben, durch die Schnittstellenschaltung (90) für die periphere Einheit (18), das Beenden der Übertragung des Datenblocks (164) zwischen dem Rechner (12) und der peripheren Einheit (18) vor der Übertragung der Gesamtheit des Datenblocks (164) als Ergebnis beispielsweise des Vorrangrechts auf die Sammelleitung (14) durch irgend eine andere der peripheren Einheiten (18,20), das Generieren einer neuen Vorblockparzelle (146) durch die Schnittstellenschaltung (90) für die periphere Einheit (18), um die Übertragung des Datenblocks (164) zu komplettieren, wobei die neue Vorblockparzelle (146) eine neue Adresse umfaßt, die aus der Adresse für den Datenblock (164), dem Rest-Zählwert der Anzahl von Einheiten des Datenblocks (164) zur Zeit der Beendigung der Übertragung des Datenblocks (164), dem Rest-Zählwert und dem Kommandocode bestimmt wird, und das Wiederholen der vorherigen Schritte des Anfordens und Gestattens, der Übertragung der neuen Vorblockparzelle (146) von der Schnittstellenschaltung (90) für die periphere Einheit (18) zu dem Rechner (12) und das sequentielle Übertragen der restlichen Einheiten des Datenblocks (164) über die Sammelleitung (14) zwischen dem Rechner (12) und der peripheren Einheit (18).

2. Eingabe/Ausgabe-Sammelleitungssystem für das Bereitstellen einer Übergabe von Datenblöcken (164) zwischen einem Rechner (12) und einer oder mehreren peripheren Einheiten (18) über eine Sammelleitung (14), bei welchem eine Sammelleitungs-Zugriffseinrichtung (38) die Nutzung der Sammelleitung (14) selektiv einer der peripheren Einheiten (18) gestattet, die Sammelleitung (14) eine Vielzahl von Adressen/Datenleitungen (58) beinhaltet, die parallel mit dem Rechner (12) und den peripheren Einheiten (18,20) für die Übertragung von Daten durch die Leitungen (58) in zwei Richtungen verbunden sind, die Sammelleitungs-Zugriffseinrichtung (38), die die Nutzung der Leitungen (58) bei Fehlen eines Konfliktes und auf einer vorher festgelegten Prioritätsbasis dann, wenn es einen Konflikt für die Nutzung der Adressen/Datenleitungen (58) durch den Rechner (12) und die peripheren Einheiten (18,20) gibt, gestattet, eine Anforderungsleitung (42) und eine Gestattungsleitung (44) für jede der peripheren Einheiten (18) für die Verbindung mit der Sammelleitungs-Zugriffseinrichtung (38) vorgesehen ist, und eine Vielzahl von Quittungs-(Handshake-) Leitungen (60), die den Rechner (12) mit den peripheren Einheiten (18,20) verbinden, um die Übertragung von Adressen und Daten zu steuern, gekennzeichnet durch

eine Vielzahl von Schaltungsmitteln (134), die entsprechend innerhalb jeder der peripheren Einheiten (18,20) angeordnet sind, um eine Vorblockparzelle (146) für die Übertragung durch die Adressen/Datenleitung (58) zu dem Rechner (12) zu generieren, wobei die Vorblockparzelle (146) eine Adresse (148) für die erste einer Vielzahl von Dateneinheiten umfaßt, welche einen Datenblock (164) umfassen, der zwischen dem Rechner (12) und einer der peripheren Einheiten (18,20) zu übertragen ist, einen Zählwert (152), der die Größe des Datenblocks (164) angibt und einen Kommandocode (150) für die Angabe eines Lesens von oder eines Schreibens zu dem Rechner (12) für den Datenblock (164), Schaltungsmittel (100) innerhalb jeder der peripheren Einheiten (18,20), die außerdem mit den Adressen/Datenleitungen (58) für die Übertragung der Vorblockparzelle (146) von jeder der peripheren Einheiten (18,20) über die Adressen/Datenleitungen (58) zu dem Rechner (12) verbunden sind,

Schaltungsmittel (174) innerhalb des Rechners (12) für das Generieren einer Folge von Adressen, die von der Adresse abgeleitet werden, die in der Vorblockparzelle (146) eingeschlossen ist, wobei die Folge von Adressen den Einheiten des Datenblocks (164) entspricht,

Speichermittel (104,188,192) innerhalb jeder der peripheren Einheiten (18,20) und des Rechners (12) für die Speicherung der Daten darin,

Steuerschaltungsmittel (92) innerhalb jeder der peripheren Einheiten (18,20), die außerdem so verbunden sind, um die Adressen/Datenleitungen (58) für das Übertragen der Dateneinheiten des Datenblocks (164) über die Adressen/Datenleitungen (58) zwischen den Speichermitteln (188,192) in dem Rechner (12) und dem Speichermittel (104) in den peripheren Einheiten (18,20) zu steuern, Schaltungsmittel (124) innerhalb jeder der peripheren Einheiten (18,20) für das Führen eines Zählwertes der Anzahl der Einheiten des Datenblocks (164), die zwischen dem Rechner (12) und der peripheren Einheit (18) im Anschluß an die Übertragung der Vorblockparzelle (146) übertragen werden, und

dadurch, daß das Schaltungsmittel (134) für das Generieren einer Vorblockparzelle so angeschlossen ist, daß es den Zählwert für das Erzeugen einer neuen Vorblockparzelle (146) empfängt, wenn die Übertragung des Datenblocks (164) vor Abschluß beendet worden ist, wobei die neue Vorblockparzelle (146) eine neue Adresse, die von der Adresse für den Datenblock (164) und dem Zählwert abgeleitet worden ist, den Zählwert für die Angabe der Größe des Restes des Datenblocks (164) und den Kommandocode beinhaltet, wobei die neue Vorblockparzelle (146) für die Übertragung von der generierenden peripheren Einheit (18) zu dem Rechner (12) dient, um die Übertragung des Datenblocks (164) abzuschließen.

FIG. 1

FIG. 2

## FIG. 3

| BYTE COUNT | RES | CMD FIELD | RES | RES | PHYSICAL ADDRESS |
|---|---|---|---|---|---|

63 ... 48   42   40   31   0

152   150   146   148

## FIG. 4

| RQST | ..... | GRANT | HEADER | DATA | DATA | ..... |

← 100 ns →

158   160   162   164   166

## FIG. 5

176   172

ADDRESS REGISTER COUNTER → PHYSICAL LONGWORD ADDRESS

178

174

WORD COUNTER → LONGWORD COUNT

182

180

ADDRESS/DATA BUS 58 / 64 → CONTROL LATCH → COMMAND

186

184

DATA INPUT LATCH 188

190 64 INTERNAL DATA BUS

DATA OUTPUT LATCH

192

## FIG. 6

INTERRUPT ACKNOWLEDGE

204

202

200

STATE INTERRUPT CONTROLLER

INTERRUPT REQUEST → (TO ARBITER 40)

68

INTERRUPT GRANT → (FROM ARBITER 40)

70

212 — ENABLE

VECTOR DATA

206

VECTOR REG

INTERRUPT VECTOR LINES →

66

LOAD VECTOR

210

208

## FIG. 7

INTERRUPT VECTOR LINES

220

226

LOCAL VECTOR

66

228

COMPARATOR

VECTOR COMPARE

230

224

STATE INTERRUPT CONTROLLER

→ INTERRUPT RCVD.

204

→ INTERRUPT ACK.

222

(FROM ARBITER 40) INTERRUPT

232

234

CLEAR INTERRUPT

EP 0 165 600 B1

16